# EUROPÄISCHE PATENTSCHRIFT

(11) **EP 1 381 542 B1**
(45) Veröffentlichungstag und Bekanntmachung des Hinweises auf die Patenterteilung: **28.12.2005**
(21) Anmeldenummer: 02726244.3
(22) Anmeldetag: 20.04.2002
(51) Int. Cl.: B65B 51/04, B65B 9/12

(54) **VORRICHTUNG UND VERFAHREN ZUM HERSTELLEN VON MIT EINEM GUT BEFÜLLTEN SCHLAUCHVERPACKUNGEN**
DEVICE AND METHOD FOR PRODUCING TUBULAR PACKS THAT ARE FILLED WITH A PRODUCT
DISPOSITIF ET PROCEDE DE FABRICATION D'EMBALLAGES TUBULAIRES REMPLIS D'UN PRODUIT

(30) Priorität: 27.04.2001 DE 10120757
(43) Veröffentlichungstag der Anmeldung: 21.01.2004
(73) Patentinhaber: Frans Vermee GmbH, 53424 Remagen (DE)
(72) Erfinder: VERMEE, Frans, 53424 Remagen (DE); LARIN, Leonid, Moskau, 127635 (RU)
(74) Vertreter: von Kirschbaum, Alexander
(86) Internationale Anmeldenummer: PCT/EP2002/004369
(87) Internationale Veröffentlichungsnummer: WO 2002/087974

(56) Entgegenhaltungen:
- CH-A- 675 947
- DE-A- 1 411 489
- DE-B- 1 141 216
- DE-C- 529 045
- US-A- 3 079 067
- US-A- 3 587 204
- US-A- 4 939 885

## Beschreibung

Die Erfindung betrifft eine Vorrichtung zum Herstellen von mit einem Gut, insbesondere einem Lebensmittel und chemische Produkte (Silikone, Klebstoffe, Sprengstoffe) befüllten Schlauchverpackungen. Derartige Schlauchverpackungen werden beispielsweise zum Verpacken von streichfähiger Wurst und dergleichen verwendet. Ferner sind derartige Schlauchverpackungen zum Verpacken chemischer Produkte, insbesondere Silikone und Klebstoffe, sowie zum Verpacken von Sprengstoff geeignet.

Schlauchverpackungen werden üblicherweise mit dem entsprechendem Gut gefüllt und in regelmäßigen Abständen mit einer Verschlussklammer aus Metall verschlossen. Es handelt sich bei der Schlauchverpackung um ein Endlosmaterial, so dass die Verschlussklammern derart angeordnet werden, dass abwechselnd zwischen zwei aufeinander folgenden Verschlussklammern eine mit Gut befüllte Schlauchverpackung und ein unbefüllter Schlauchabschnitt ausgebildet sind. Um eine einzelne mit Gut befüllte Schlauchverpackung herzustellen, wird nach dem Verschließen mit Verschlussklammern die Schlauchverpackung in dem unbefüllten Abschnitt durch Schneiden zertrennt.

Eine Vorrichtung zum Herstellen von mit einem Lebensmittel befüllten Schlauchverpackungen ist in DE 40 11 470 A1 beschrieben. Zum Verschließen der einzelnen Schlauchverpackungen werden Verschlussklammern aus einem flachen Metallstück eingesetzt. Das in unverformtem Zustand rechteckige Metallstück wird um die gefüllte Schlauchverpackung gelegt und durch eine Verschließeinrichtung verschlossen. Mittels der Verschließeinrichtung wird die Verschlussklammer gebogen und von zwei Seiten zusammengepresst, so dass eine flache Verschlussklammer entsteht. Die Enden der Verschlussklammer überlappen sich, um zu vermeiden, dass das in der Schlauchverpackung vorhandene Gut austritt. Die aus DE 40 11 470 A1 bekannte Verschlussklammer ist in verschlossenem Zustand somit im Wesentlichen rechteckig, wobei von den beiden aneinander gegenüberliegenden längeren Seiten die zum Verschließen erforderliche Kraft auf die Schlauchverpackung ausgeübt wird.

Derartige Verschlussklammern haben den Nachteil, dass insbesondere aufgrund der sich überlappenden Enden der Verschlussklammern häufig Dichtigkeitsprobleme auftreten. Dies führt dazu, dass die Haltbarkeit derartiger Produkte beschränkt ist und die Produkte in Kühlregalen gelagert werden müssen. Ein weiterer Nachteil besteht darin, dass mit der beschriebenen Vorrichtung nur Verschlussklammern einer bestimmten Größe verarbeitet werden können. Dies hat zur Folge, dass nur Schlauchverpackungen innerhalb eines engen Durchmesserbereichs verarbeitet werden können. Die verarbeitbaren Massabweichungen sind äußerst gering. Ferner ist eine Verarbeitung unterschiedlicher Verpackungsmaterialien schwierig, wenn sich diese in der Materialdicke unterscheiden und somit in zusammengerafftem Zustand an der Stelle, an der die Verschlussklammer angeordnet ist, eine unterschiedliche Materialmenge auftritt. Dies führt sehr häufig zu Dichtigkeitsproblemen. Um unterschiedliche Schlauchverpackungen mit dieser Vorrichtung verarbeiten zu können, ist ein hoher Umbauaufwand erforderlich.

Aufgabe der Erfindung ist es eine Vorrichtung zum Herstellen von mit einem Gut befüllten Schlauchverpackungen zu schaffen, mit der unterschiedliche Schlauchverpackungen verschlossen werden können. Ferner ist es Aufgabe der Erfindung, ein entsprechendes Verfahren zu schaffen.

Die Lösung der Aufgabe erfolgt erfindungsgemäß durch eine Vorrichtung gemäß Anspruch 1 sowie ein Verfahren gemäß Anspruch 19.

Die erfindungsgemäße Vorrichtung zum Herstellen von mit einem Gut befüllten Schlauchverpackungen weist eine Transporteinrichtung zum Fördern eines mit Gut befüllten Schlauchs, eine Schließeinrichtung zum Verschließen des Schlauchs sowie vorzugsweise eine Schneideinrichtung zum Abtrennen von einzelnen oder mehreren zusammenhängenden Schlauchverpackungen auf. Die Verschließeinrichtung weist gegeneinander bewegbare Quetschelemente zum Zusammendrücken einer den Schlauch verschließenden Verschlussklammer auf. Die einzelnen Verschlussklammern sind vorzugsweise derart angeordnet, dass zwischen in Förderrichtung aufeinander folgenden Verschlussklammern abwechselnd eine mit Gut befüllte Schlauchverpackung und ein unbefüllter Schlauchabschnitt ausgebildet sind. Das Trennen des mit Gut befüllten Schlauchs in einzelne Schlauchverpackungen erfolgt sodann vorzugsweise durch die Schneideinrichtung, wobei die Schneideinrichtung den Schlauch an den unbefüllten Schlauchabschnitt zertrennt. Die Verschließeinrichtung ist erfindungsgemäß derart ausgebildet, dass mindestens drei Quetschelemente vorgesehen sind. Die Quetschelemente werden durch ein Verschiebeelement derart verschoben, dass sie im Wesentlichen radial nach innen gerichtete Quetschkräfte auf die Verschlussklammer aufbringen.

Durch das im Wesentlichen radiale Verschieben der Quetschelemente wirken im Bereich der Verschlussklammer annähernd gleichmäßig und im Umfang verteilte radiale Kräfte auf den Schlauch. Hierdurch ist eine erheblich größere Dichtigkeit des Verschlusses gewährleistet. Dies hat zur Folge, dass die Haltbarkeit des in der Schlauchverpackung vorhandenen Gutes erheblich verlängert ist. Ferner ist es hierdurch möglich, bei der Verpackung von Lebensmitteln, diese auch außerhalb von Kühlregalen über längere Zeit aufzubewahren.

Ferner ist es möglich, die im Wesentlichen radiale Verschiebung der Quetschelemente einzustellen. Hierdurch kann der Umfang der zusammengequetschten Verschlussklammer variiert werden. Hierzu ist es lediglich erforderlich, bei einer beispielsweise aus einem Metalldraht bestehenden Verschlussklammer ein Drahtstück entsprechender Länge vorzusehen, dass sodann bei Verwendung von drei Quetschelementen zu einem Dreieck geformt wird. Da unterschiedliche Umfänge der Verschlussklammern in zusammengequetschtem Zustand durch die erfindungsgemäße Verschließeinrichtung auf einfache Weise realisiert werden können, ist kein aufwendiger Umbau der Verschließeinrichtung erforderlich, um beispielsweise Schlauchverpackungen mit unterschiedlichem Außendurchmesser und damit unterschiedlicher zu verschließender Materialmenge mit Hilfe der erfindungsgemäßen Vorrichtung verschließen zu können. Auch Unterschiede der Verpackungsdicke für die ebenfalls unterschiedliche Verschlussklammern benötigt werden, können durch die erfindungsgemäße Vorrichtung auf einfache Weise eingestellt und damit ausgeglichen werden.

Durch die erfindungsgemäße Verschließeinrichtung wird bei dem Verwenden von drei Quetschelementen in zusammengequetschtem Zustand eine dreieckige Verschlussklammer erzeugt. Vorzugsweise werden sechs, und besonders bevorzugt, acht Quetschelemente vorgesehen. Hierdurch wird eine in zusammengequetschtem Zustand sechs- bzw. achteckige Verschlussklammer erzeugt, so dass die Dichtigkeit der Verschlussstelle weiter erhöht ist. Aufgrund der sich einem runden Verschluss annähernden Form der Verschlussklammer ist es ferner nicht erforderlich, dass sich die Enden der Verschlussklammer überlappen.

Die einzelnen Quetschelemente können jeweils mit einem Verschiebeelement verbunden sein, durch das ein im Wesentlichen radiales Bewegen der Quetschelemente verwirklicht ist. Vorzugsweise werden die Verschiebeelemente mittels eines gemeinsamen Schneckenantriebs verschoben.

Vorzugsweise ist das Verschiebeelement oder mehrere Verschiebeelemente mit den Quetschelementen derart verbunden, dass durch ein Bewegen bzw. Betätigen des bzw. der Verschiebeelement die Quetschelement in radialer Richtung verschoben werden. Besonders bevorzugt ist es, ein oder mehrere Verschiebeelemente vorzusehen, wobei durch Drehen des Verschiebeelements bzw. der Verschiebeelemente das radiale Verschieben der Quetschelemente hervorgerufen wird. Besonders bevorzugt ist es hierbei, ein einziges, vorzugsweise ringförmiges, Verschiebeelement für sämtliche Quetschelemente vorzusehen. Das Verschiebeelement ist vorzugsweise über Zapfen oder Ansätze und korrespondierende Schlitze mit den Quetschelementen verbunden.

Bei einer bevorzugten Ausführungsform ist die Verschlusseinrichtung nach Art einer Irisblende ausgebildet. Die einzelnen Quetschelemente sind hierbei mit dem Schiebeelement derart verbunden, dass durch Drehen des Schiebeelements ein Verschieben der Quetschelemente in im Wesentlichen radialer Richtung erfolgt. Bei einer nach Art einer Irisblende ausgebildete Verschließeinrichtung erfolgt zusätzlich ggf. ein Drehen der Quetschelemente. Dies ist hinsichtlich der radial gerichteten Quetschkräfte unerheblich. Beim Verschließen der Irisblende erfolgt ein Biegen und/oder Zusammendrücken der Verschlussklammer. Bei der Verschlussklammer kann es sich vor dem Verschließen der Irisblende um ein gerades Stück Draht, insbesondere Flachdraht handeln. Ferner kann die Verschlussklammer bereits vorgebogen sein.

Die irisblendenartige Verschlusseinrichtung ist vorzugsweise derart aufgebaut, dass das zu drehende Verschiebeelement Ansätze oder Schlitze aufweist, und jeder Ansatz bzw. Schlitz in jeweils einen im Querelement vorgesehenen Schlitz bzw. Ansatz eingreift. Durch Drehen des Verschließelements gleiten die Ansätze in den Schlitzen. Hierdurch erfolgt ein radiales Verschieben der Quetschelemente. Die Öffnung der irisblendenartigen Verschließeinrichtung ist somit abhängig von dem Grad der Verdrehung des Verschiebeelements. Je weiter das Verschiebeelement gedreht wird, desto kleiner ist die Öffnung der Irisblende. Dies hat zur Folge, dass sich die Quetschkräfte bei sich verkleinernder Irisblendenöffnung im Wesentlichen linear erhöhen.

Vorzugsweise sind die Quetschelemente in einer Ebene angeordnet. Dies hat den Vorteil, dass ein Verkanten oder Verkippen der Verschlussklammer während des Verschließvorgangs vermieden ist.

Ebenso ist es auch möglich, kreisringsegmentförmige oder nierenförmige Quetschelemente vorzusehen. Je nach Form der Quetschelemente kann ein annähernd rundes Verformen der Verschlußklammer erfolgen. Hierdurch ist ein sehr dichtes Abschließen der Verpackung realisiert. Derartige Quetschelemente überdecken vorzugsweise einander teilweise und sind daher in unterschiedlichen Ebenen angeordnet. Ebenso ist es auch möglich, die einzelnen Quetschelemente leicht geneigt zueinander anzuordnen, so dass wiederum ein irisblendenartiger Verschluß realisiert ist und jedes einzelne Quetschelement vorzugsweise wiederum mit einem gemeinsamen drehbaren Verschiebeelement verbunden ist.

Bei einer bevorzugten Ausführungsform der erfindungsgemäßen Vorrichtung ist eine Ablängeinrichtung vorgesehen. Die Ablängeinrichtung dient zum Ablängen der als Endlosmaterial, insbesondere als Endlosdraht ausgebildeten Verschlussklammer. Mit Hilfe der Ablängeinrichtung wird das Endlosmaterial auf eine entsprechende Länge abgelängt. Die Länge ist abhängig von dem Durchmesser des mit Gut befüllten Schlauchs sowie von der Materialstärke des Schlauchs. Die Ablängung erfolgt vorzugsweise auf einer Länge, das ein Überlappen der Enden der Verschlussklammer vermieden ist. Da bekannt ist, wie weit die Quetschelemente der Verschließeinrichtung aufeinander zubewegt werden, d. h. wie groß die verbleibende Öffnung ist, ist die Länge der Verschlussklammern vorzugsweise so gewählt, dass die beiden Enden bei zusammengequetschter Verschlussklammer exakt aneinander anliegen. Hierdurch ist ein äußerst dichtes Verschließen der Schlauchverpackung möglich.

Die abzulängende Länge des Endlosmaterials kann beispielsweise durch einen Anschlag eingestellt werden. Ferner ist es möglich, die abzulängende Länge aufgrund des Drahtvorschubs relativ zu einer Ablängstelle der Ablängeinrichtung einzustellen. Der Drahtvorschub erfolgt hierbei vorzugsweise elektrisch.

In einer besonders bevorzugten Ausführungsform ist eines der Quetschelemente als Ablängeinrichtung ausgebildet. Hierzu kann das entsprechende Quetschelement eine Schneidkante aufweisen, so dass vorzugsweise unmittelbar beim radialen Verschieben des entsprechenden Quetschelements ein Ablängen des Endlosmaterials erfolgt. Das Ablängen und anschließende Zusammenquetschen. der Verschlussklammer erfolgt somit vorzugsweise in einem Arbeitsschritt.

Die Erfindung betrifft ferner ein Verfahren zum Herstellen von mit einem Gut, insbesondere einem Lebensmittel befüllten Schlauchverpackungen. Für die Durchführung des Verfahrens ist die vorstehend beschriebene Vorrichtung besonders gut geeignet. Während des Verfahrens wird eine mit Gut befüllte Schlauchverpackung einer Verschließeinrichtung zugeführt. Hierbei handelt es sich vorzugsweise um ein kontinuierliches Fördern des mit gut befüllten Schlauchs. Ferner wird eine Verschlussklammer der Verschließeinrichtung mit mindestens drei die Schlauchverpackung umgebenden Quetschelementen zugeführt. Im nächsten Schritt werden die Quetschelemente derart in im Wesentlichen radialer Richtung verschoben, dass durch die Quetschelemente radiale Quetschkräfte auf die Verschlussklammer ausgeübt werden. Im letzten Schritt werden sodann aufeinanderfolgende Schlauchverpackungen erzeugt, in dem zwischen zwei in Förderrichtung aufeinanderfolgenden Verschlussklammern die Schlauchverpackung zertrennt wird.

Vorzugsweise werden die Quetschelemente zum Verschließen der Schlauchverpackung durch Drehen eines mit den Quetschelementen verbundenen Verschiebeelements im Wesentlichen in radialer Richtung verschoben. Ebenso können hierzu mehrere Verschiebeelemente vorgesehen sein. Bevorzugt ist es jedoch, ein einziges Verschiebeelement für sämtliche Quetschelemente vorzusehen, so dass durch ein einfaches Drehen eines Verschiebeelements sämtliche Quetschelemente, insbesondere gleichmäßig radial nach innen, verschoben werden. Hierdurch ist auf die Verschlußklammer eine gleichmäßige Kraft ausgeübt.

Vorzugsweise werden aufeinanderfolgende Verschlussklammern derart an dem Schlauch vorgesehen, dass zwischen zwei in Förderrichtung aufeinanderfolgende Verschlussklammern abwechselnd eine mit Gut befüllte Schlauchverpackung und ein unbefüllter Schlauchabschnitt ausgebildet werden. Das Zertrennen der Schlauchverpackung erfolgt vorzugsweise zwischen zwei Verschlussklammern innerhalb des unbefüllten Schlauchabschnittes.

Besonders bevorzugt ist es, der Verschließeinrichtung ein Endlosmaterial, insbesondere einem Endlosdraht zuzuführen und das Endlosmaterial zur Ausbildung der Verschlussklammer abzulängen. Durch das Verwenden von Endlosmaterial als Verschlussklammer ist hinsichtlich des Umfanges der Verschlussklammer in zusammengequetschtem Zustand ein äußerst variables Verfahren geschaffen, bei dem dieser Umfang auf einfache Weise verändert werden kann.

Vorzugsweise wird bei dem erfindungsgemäßen Verfahren eine derartige Quetschkraft erzeugt, dass sich das Verpackungsmaterial im Bereich der Verschlussklammer miteinander verbindet. Handelt es sich bei dem Verpackungsmaterial um Kunststoff, kann hierdurch ein Verschmelzen des Verpackungsmaterials erzielt werden. Hierdurch ist die Dichtigkeit der Schlauchverpackung an der Verschlussstelle erheblich verbessert. Insbesondere bei Kunststoffmaterial kann eine vollständig dichte Verschweißung des Verpackungsmaterials erfolgen. Dies kann ausschließlich durch Erhöhen der Quetschkräfte erfolgen. Es ist ebenso möglich, anstelle der Erhöhung der Quetschkräfte, dem Verschlussbereich zusätzlich Wärme zuzuführen. Um ein Beeinträchtigen von Lebensmitteln durch die Wärme zu vermeiden, ist es möglich, ausschließlich der Verschlussklammer selbst Wärme zuzuführen, wenn diese aus einem wärmeleitenden Material wie Metall besteht.

In Abhängigkeit der Transportgeschwindigkeit des Wurstschlauchs ist es möglich, die Verschlusseinrichtung während des Quetschvorgangs zusammen mit dem Schlauch in dessen Transportrichtung zu bewegen. Hierdurch ist ein sicheres Verschließen erreicht. Insbesondere beim Eindringen von Wärme ist eine sich mitbewegende Verschlussvorrichtung vorteilhaft. Vorzugsweise erfolgt der Transport des Schlauchs in vertikale Richtung. Dies hat den Vorteil, dass der Schlauch innerhalb der Verschließeinrichtung freihängend gehalten werden kann. Die Verschlusseinrichtung ist hierbei vorzugsweise horizontal angeordnet. Ein Mitbewegen der Verschlusseinrichtung hat den Vorteil, dass ein kontinuierlicher Transport des mit Gut befüllten Schlauchs erfolgen kann. Ein "stop-and-go"-Betrieb zum Verschließen der Schlauchverpackung ist daher nicht erforderlich.

Nachfolgend werden die Erfindungen an einer bevorzugten Ausführungsform unter Bezugnahme auf die anliegenden Zeichnungen näher erläutert.

Es zeigen:
- Fig. 1: eine schematische, teilweise geschnittene Seitenansicht der erfindungsgemäßen Vorrichtung,
- Fig. 2-5: schematische Draufsichten auf die Verschließeinrichtung in verschiedenen Stellungen und
- Fig. 6: eine schematische Schnittansicht entlang der Linie VI-VI in Fig. 2.

Ein Schlauch 10 wird innerhalb einer Abfülleinrichtung 12 mit Gut, insbesondere einem Lebensmittel befüllt. Hierdurch entsteht ein mit gut befüllter Schlauch 14, der in einzelne Schlauchverpackungen 16 unterteilt werden muss. Die Enden 18,20 der Schlauchverpackung 16 sind jeweils mit einer Verschlussklammer 22 verschlossen. Zum Anbringen der Verschlussklammern 22 sind im dargestellten Ausführungsbeispiel zwei Verschließeinrichtungen 24 vorgesehen, die in einem geringen horizontalen Abstand zueinander angeordnet sind und den befüllten Schlauch 14 raffen, zusammenquetschen und mit Hilfe der Verschlussklammer verschließen.

Zwischen den beiden Verschließeinrichtungen 24 ist ein nicht oder ein allenfalls geringfügig mit Gut befüllter Schlauchabschnitt 26 ausgebildet. An dem unbefüllten Schlauchabschnitt 26 wird der befüllte Schlauch 14 mit Hilfe einer Schneideinrichtung 28 zertrennt.

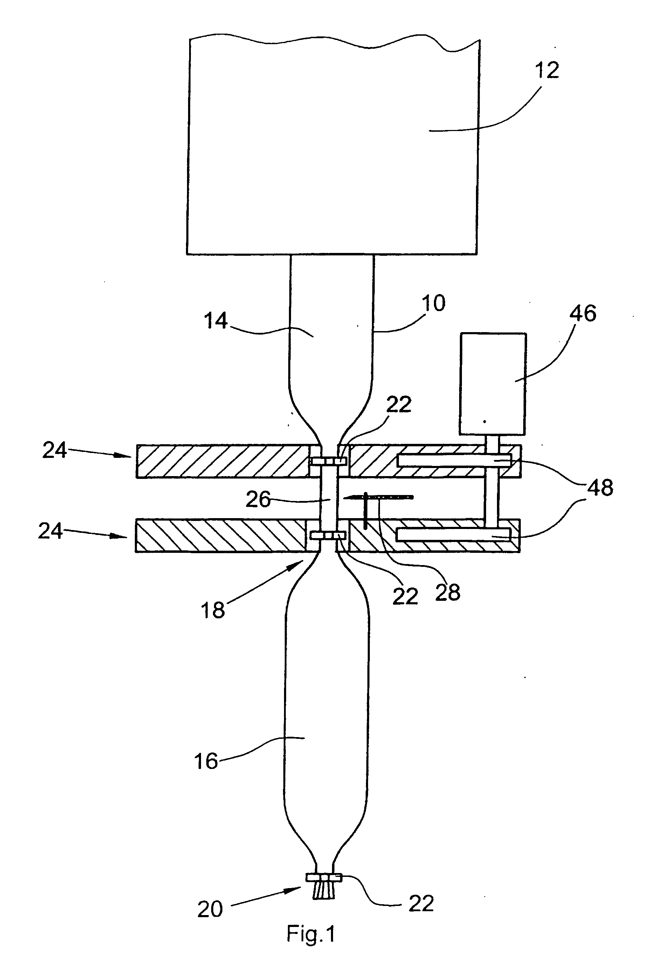

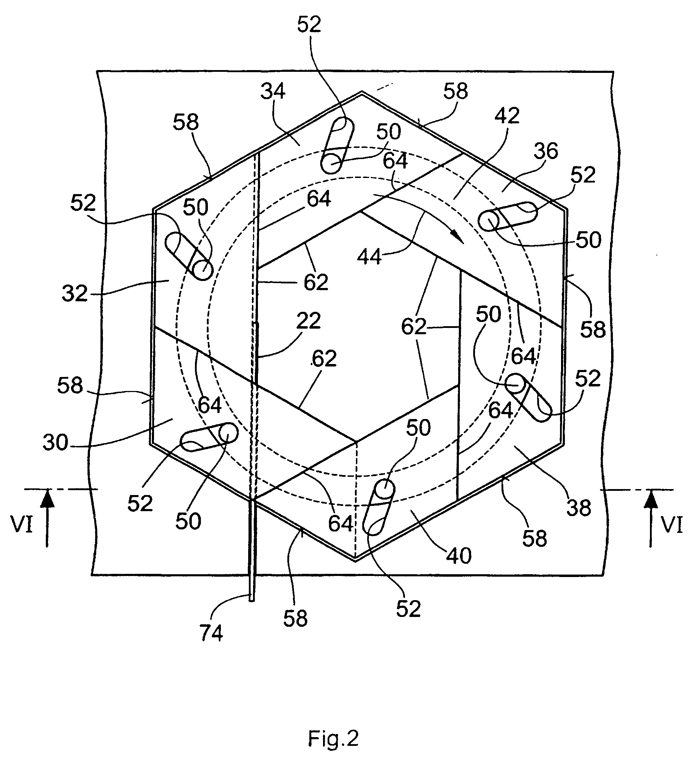

Die Verschließeinrichtung weist mehrere Quetschelemente 30,32,34,36,38,40 (Fig. 2) auf, die über ein Verschiebeelement 42 verschiebbar sind. Zur Verschiebung der Quetschelemente 30,32,34,36,38,40 muss das Verschiebeelement 42 in Richtung eines Pfeils 44 gedreht werden. Der Antrieb der beiden in den in Fig. 1 dargestellten Verschließeinrichtungen 24 und den hierfür vorgesehenen Verschiebeelementen 42 (Fig. 2) erfolgt über einen Motor 46, der beispielweise über Zahnräder 48 oder dergleichen mit den Verschiebeelementen 42 in Eingriff steht. Ebenso kann beispielsweise eine Kurvenscheibe oder ähnliches zum Antrieb der Verschiebeelemente 42 vorgesehen sein.

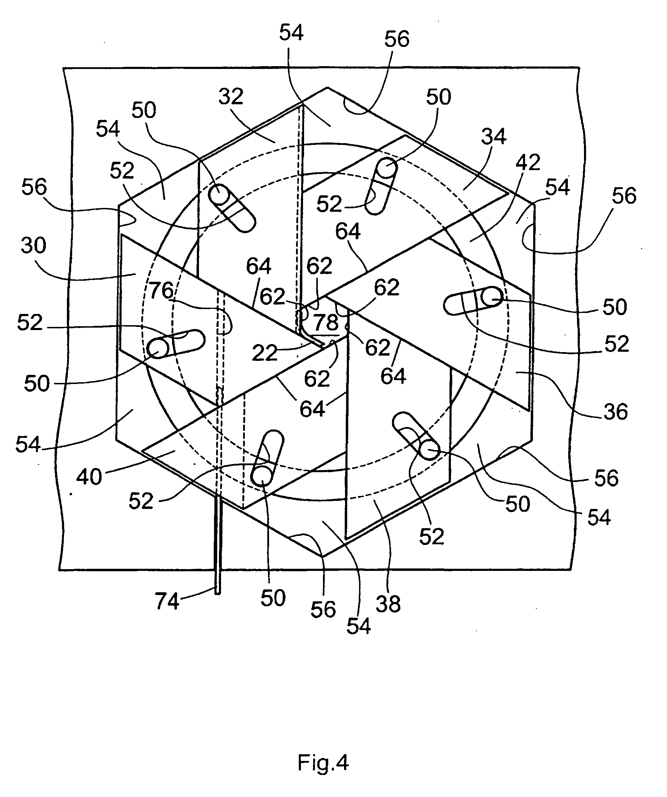

Die Bewegung der Quetschelemente 30,32,34,36,38,40 ergibt sich aus den Fig. 2-5. Hierzu weist das im Wesentlichen kreisringförmige Verschiebeelement 42 unter dem dargestellten Ausführungsbeispiel sechs Zapfen 50 auf. Die Zapfen 50 sind in regelmäßigen Abständen an dem kreisringförmigen Schiebeelement 42 angeordnet. Jeder Zapfen bzw. Ansatz 50 ragt jeweils in einen Schlitz 52. Jedes Quetschelement 30,32,34,36,38,40 weist einen Schlitz 52 auf. Beim Drehen des Verschiebeelements 42 in Richtung des Pfeils 44 gleiten die Ansätze, bzw. Zapfen 50 in die Schlitze 52. Hierdurch erfolgt die an den Fig. 2-5 ersichtliche Bewegungen der Quetschelemente 30,32,34,36,38,40.

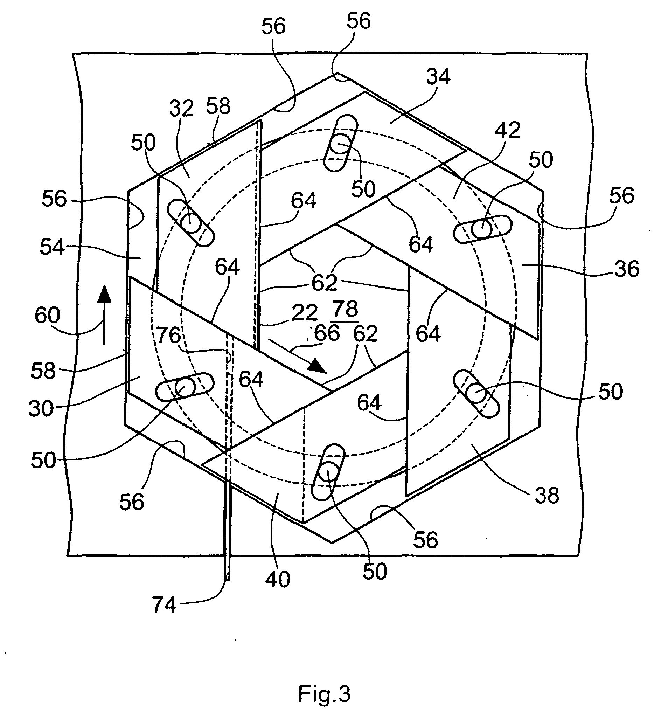

Um beim Drehen des Verschiebeelements 42 ein Mitdrehen der Quetschelemente 30,32,34,36,38,40 zu vermeiden, sind die Quetschelemente 30,32,34,36,38,40 im dargestellten Ausführungsbeispiel in einer sechseckigen Ausnehmung 54 angeordnet. Die sechseckige Ausnehmung 54 weist sechs Innenkanten 56 auf; wobei an jeder Innenkante 56 jeweils eine Schmalseite 58 der Quetschelemente 30,32,34,36,38,40 anliegt. Beim Drehen des Verschiebeelements 42 in Richtung des Pfeils 44 gleiten die Seitenflächen 58 der Quetschelemente 30,32,34,36,38,40 an den Innenseiten 56 der Öffnung 54 in Richtung eines Pfeils 60 (Fig. 3).

Da die Quetschelemente 30,32,34,36,38,40 in einer Ebene angeordnet sind, gleiten benachbarte Quetschelemente bei einer Drehung des Verschiebeelements 42 entlang sich berührender Schmalseiten 62, bzw. 64. Beispielsweise gleitet das Quetschelement 32 mit seiner Schmalseite 64 an einer langen Schmalseite 62 des Quetschelements 30 in Richtung eines Pfeils 66. Eine entsprechende Bewegung erfolgt ebenfalls zwischen den anderen benachbarten Quetschelementen 30,32,34,36,38,40.

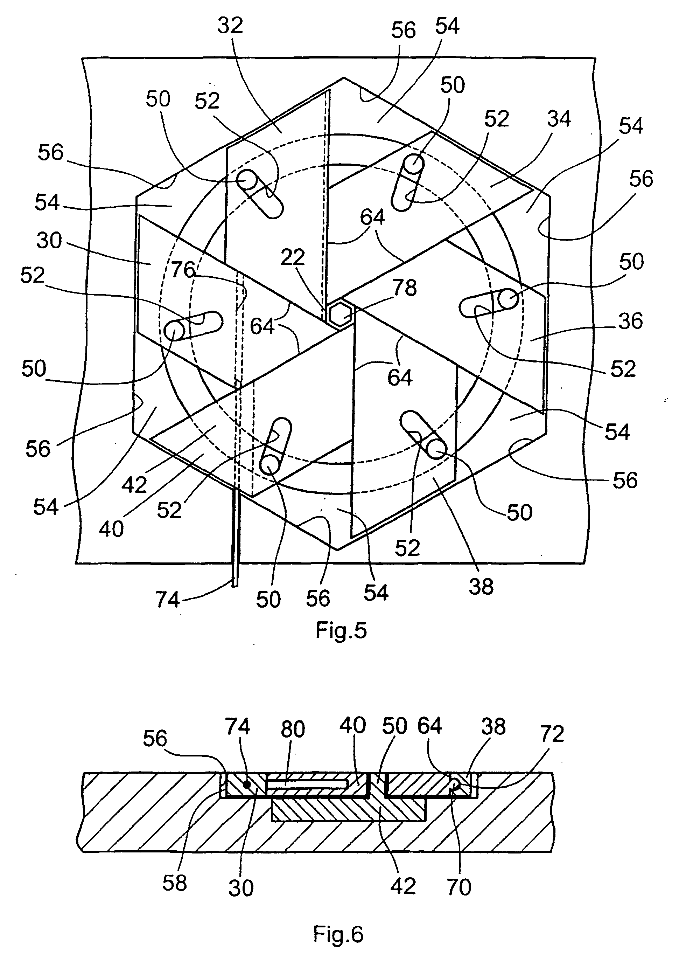

Um ein Verkanten der Quetschelemente 30,32,34,36,38,40 zu vermeiden, weist eine Schmalseite 62 einen Führungsansatz 70 auf (Fig. 6). Der Führungsansatz 70 greift in eine Führungsnut 72, die in der Schmalseite 62 des benachbarten Quetschelements 38 vorgesehen ist.

Die Verschlussklammer 22 besteht aus einem biegbarem Draht. In Abhängigkeit der erforderlichen Länge der Verschlussklammer 22 wird diese von einem Endlosdraht 74 abgeschnitten. Die Länge der Verschlussklammer 22 richtet sich nach der geforderten Verschlussstellung (Fig. 5). Diese ist von der Menge an Schlauchmaterial abhängig, die von der Verschlussklammer umschlossen werden soll. Der Metalldraht 74, von dem die Verschlussklammer 22 abgeschnitten wird, wird über eine in dem Quetschelement 30 vorgesehene Bohrung 76 in den von den sechs Quetschelementen 30,32,34,36,38,40 gebildeten sechseckigen Innenraum 78 eingeführt. Durch einen entsprechenden Vorschub des Drahts 74 oder durch einen geeigneten Anschlag wird die erforderliche Länge der Verschlussklammer 22 bestimmt. Durch ein Bewegen des Quetschelementes 32 in Richtung des Pfeils 66 (Fig. 3) erfolgt ein Abschneiden der Verschlussklammer 22. Hierzu ist die in Richtung der Öffnung 78 weisende Schmalseite 62 des Quetschelementes 32 in dem Bereich, in dem das Abschneiden des Drahtes 74 erfolgt, als Schneide ausgebildet.

Damit der Draht 74 nicht vollständig aus der Querbohrung 76 herausgezogen werden muss, um ein Bewegen der Quetschelemente zum Verquetschen der Verschlussklammer zu ermöglichen, ist in dem zu dem Quetschelement 30 benachbarten Quetschelement 40 ein Schlitz 80 (Fig. 6) vorgesehen, der zur Aufnahme des Drahtes 74 beim Verschieben der Quetschelemente 30,32,34,36,38,40 in die in den Fig. 2-5 dargestellten Stellungen dient.

## Patentansprüche

1. Vorrichtung zum Herstellen von mit einem Gut, insbesondere einem Lebensmittel befüllten Schlauchverpackungen (16), mit
einer Transporteinrichtung zum Fördern eines mit dem Gut befüllten Schlauchs (10), und
einer Verschließeinrichtung (24) zum Verschließen des Schlauchs (10), mit gegeneinander bewegbaren Quetschelementen (30,32,34,36,38,40) zum Zusammendrücken einer den Schlauch (10) verschließenden Verschlussklammer (22),
**dadurch gekennzeichnet,**
**dass** die Verschließeinrichtung (24) mindestens drei Quetschelemente (30,32,34,36,38,40) aufweist, die durch ein Verschiebeelement (42) derart verschiebbar sind, dass die Quetschelemente (30,32,34,36,38,40) radial nach innen gerichtete Quetschkräfte auf die Verschlussklammer (22) aufbringen.

2. Vorrichtung nach Anspruch 1, **dadurch gekennzeichnet, dass** die Quetschelemente (30,32,34,36,38,40) radial verschiebbar angeordnet sind.

3. Vorrichtung nach Anspruch 1 oder 2, **dadurch gekennzeichnet, dass** das Verschieben der Quetschelemente (30,32,34,36,38,40) durch Verdrehen des Verschiebeelements erfolgt.

4. Vorrichtung nach einem der Ansprüche 1-3, **dadurch gekennzeichnet, dass** die Verschließeinrichtung (24) nach Art einer Irisblende ausgebildet ist, so dass durch Drehen des Verschiebeelements (42) ein Verschieben der Quetschelemente (30,32,34,36,38,40) erfolgt.

5. Vorrichtung nach einem der Ansprüche 1-4, **dadurch gekennzeichnet, dass** das Verschiebeelement (42) Ansätze (50) oder Schlitze aufweist, wobei jeder Ansatz (50) bzw. Schlitz in jeweils einen in jedem Quetschelement (30,32,34,36,38,40) vorgesehenen Schlitz (52) bzw. Ansatz eingreift, so dass beim Betätigen des Verschiebeelements (42) die Ansätze (50) in den Schlitzen (52) gleiten.

6. Vorrichtung nach einem der Ansprüche 1-5, **dadurch gekennzeichnet, dass** zwischen in Förderrichtung aufeinanderfolgenden Verschlussklammern (22) abwechselnd eine mit Gut befüllte Schlauchverpackung (16) und ein unbefüllter Schlauchabschnitt (26) ausgebildet ist.

7. Vorrichtung nach Anspruch 6, **gekennzeichnet durch** eine Schneideinrichtung (28) zum Zertrennen des Schlauchs (10) an dem unbefüllten Schlauchabschnitte (26).

8. Vorrichtung nach einem der Ansprüche 1-7, **dadurch gekennzeichnet, dass** die Quetschelemente (30,32,34,36,38,40) in einer Ebene angeordnet sind.

9. Vorrichtung nach einem der Ansprüche 1-5, **dadurch gekennzeichnet, dass** eine Schmalseite (64) eines Quetschelements (30,32,34,36,38,40) an einer Schmalseite (62) eines benachbarten Quetschelements (30,32,34,36,38,40) gleitet.

10. Vorrichtung nach Anspruch 9, **dadurch gekennzeichnet, dass** eine Schmalseite (62) eine Führungsnut (72) aufweist, in die ein Führungsansatz (70) der benachbarten Schmalseite (64) eingreift.

11. Vorrichtung nach einem der Ansprüche 1-10, **dadurch gekennzeichnet, dass** die Quetschelemente kreisringsegmentförmig oder nierenförmig sind.

12. Vorrichtung nach einem der Ansprüche 1-7, **dadurch gekennzeichnet, dass** die Quetschelemente in mehreren, zueinander parallelen Ebenen angeordnet sind.

13. Vorrichtung nach einem der Ansprüche 1-12, **dadurch gekennzeichnet, dass** die Quetschelemente (30,32,34,36,38,40) derart angeordnet sind, dass die Verschlussklammer (22) in zusammengequetschtem Zustand dreieckförmig oder sechseckförmig ist.

14. Vorrichtung nach einem der Ansprüche 1-13, **gekennzeichnet durch** eine Ablängeinrichtung zum Ablängen der als Endlosmaterial (74), insbesondere Endlosdraht zugeführten Verschlusskammer (22).

15. Vorrichtung nach Anspruch 14, **dadurch gekennzeichnet, dass** eines der Quetschelemente (30) als Ablängeinrichtung ausgebildet ist.

16. Vorrichtung nach Anspruch 14 oder 15, **dadurch gekennzeichnet, dass** eines der Quetschelemente (30) einen Zuführkanal (76) zum Zuführen des Endlosmaterials (74) aufweist.

17. Vorrichtung nach einem der Ansprüche 6-16, **dadurch gekennzeichnet, dass** zwei Verschließeinrichtungen (24) in Förderrichtung derart hintereinander angeordnet sind, dass zwischen den beiden Verschließeinrichtungen (24) der unbefüllte Schlauchabschnitt (26) angeordnet ist.

18. Vorrichtung nach Anspruch 17, **dadurch gekennzeichnet, dass** zwischen den beiden Verschließeinrichtungen (24) die Schneideinrichtung (28) angeordnet ist.

19. Verfahren zum Herstellen von mit einem Gut, insbesondere einem Lebensmittel befüllten Schlauchverpackungen (16), mit den Schritten
Zuführen der mit Gut gefüllten Schlauchverpackung (16) zu einer Verschließeinrichtung (24),
Zuführen einer Verschlussklammer (22) zu mindestens drei, die Schlauchverpackung (16) umgebenden Quetschelementen (30,32,34,36,38,40) der Verschließeinrichtung (24),
Verschieben der Quetschelemente (30,32,34,36,38,40) in radiale Richtung (66), so dass durch die Quetschelemente (30,32,34,36,38,40) radiale Quetschkräfte auf die Verschlussklammer (22) ausgeübt werden und
Zertrennen der Schlauchverpackung (16) zwischen zwei in Förderrichtung aufeinanderfolgende Verschlussklammern (22).

20. Verfahren nach Anspruch 19, bei welchem das Verschieben der Quetschelemente (30,32,34,36,38,40) durch Drehen eines mit den Quetschelementen (30,32,34,36,38,40) verbundenen Verschiebeelements (42) erfolgt.

21. Verfahren nach Anspruch 19 oder 20, bei welchem zwischen zwei in Förderrichtung aufeinanderfolgenden Verschlussklammern (22) abwechselnd eine mit Gut befüllte Schlauchverpackung (16) und ein unbefüllter Schlauchabschnitt (26) ausgebildet wird.

22. Verfahren nach einem der Ansprüche 19-21, bei welchem der Verschließeinrichtung (24) Endlosmaterial (74), insbesondere Endlosdraht zugeführt und das Endlosmaterial (74) zur Ausbildung der Verschlussklammer (22) abgelängt wird.

23. Verfahren nach Anspruch 22, bei welchem das Endlosmaterial (74) in Abhängigkeit des Umfangs der Verschlussklammer (22) in zusammengequetschtem Zustand abgelängt wird.

24. Verfahren nach Anspruch 23, bei welchem das Endlosmaterial (74) derart abgelängt wird, dass sich die Enden der Verschlussklammer (22) in zusammengequetschtem Zustand nicht überlappen.

25. Verfahren nach einem der Ansprüche 19-24, bei welchem eine derartige Quetschkraft erzeugt wird, dass sich das Verpackungsmaterial (10) verbindet, vorzugsweise miteinander verschmilzt.

## Claims

1. A device for producing tubular packs (16) that are filled with a product, particularly with a foodstuff, comprising
a conveying device for conveying a tube (10) filled with the product, and
a closing device (24) for closing the tube (10), with pinching elements (30,32,34,36,38,40) which can be moved toward one another for pressing a closing clasp (22) together that closes the tube (10),
**characterized in**
**that** the closing device (24) comprises at least three pinching elements (30,32,34,36,38,40) that are displaceable by a displacing element (42) in such a manner that the pinching elements (30,32,34,36,38,40) exert radially inward directed pinching forces onto the closing clasp (22).

2. The device according to claim 1, **characterized in that** the pinching elements (30,32,34,36,38,40) are arranged so as to be radially displaced.

3. The device according to claim 1 or 2, **characterized in that** the displacement of the pinching elements (30,32,34,36,38,40) is effected by rotating the displacing element.

4. The device according to one of claims 1-3, **characterized in that** the closing device (24) is configured in the manner of an iris diaphragm so that the pinching elements (30,32,34,36,38,40) are displaced by rotating the displacing element (42).

5. The device according to one of claims 1-4, **characterized in that** the displacing element (42) comprises lugs (50) or slots, each lug (50) and slot, respectively, engaging into a slot (52) and lug, respectively, which are provided in each pinching element (30,32,34,36,38,40) so that the lugs (50) slide in the slots (52) when the displacing element (42) is actuated.

6. The device according to one of claims 1-5, **characterized in that** a tubular pack (16) filled with a product and an empty tube section (26) are alternately formed between closing clasps (22) succeeding each other in conveyance direction.

7. The device according to claim 6, **characterized by** a cutting means (28) for separating the tube (10) at the empty tube section (26).

8. The device according to one of claims 1-7, **characterized in that** the pinching elements (30,32,34,36,38,40) are arranged in one plane.

9. The device according to one of claims 1-5, **characterized in that** a narrow side (64) of a pinching element (30,32,34,36,38,40) glides at a narrow side (62) of a neighboring pinching element (30,32,34,36,38,40).

10. The device according to claim 9, **characterized in that** a narrow side (62) comprises a guiding groove (72) into which a guiding projection (70) of the neighboring narrow side (64) engages.

11. The device according to one of claims 1-10, **characterized in that** the pinching elements have the shape of an annulus segment or are kidney-shaped.

12. The device according to one of claims 1-7, **characterized in that** the pinching elements are arranged in several planes parallel to each other.

13. The device according to one of claims 1-12, **characterized in that** the pinching elements (30,32,34,36,38,40) are arranged such that the closing clasp (22) is triangular or hexagonal in the crimped state.

14. The device according to one of claims 1-13, **characterized by** a severing means for severing the closing clasp (22) supplied as endless material (74), particularly as an endless wire.

15. The device according to claim 14, **characterized in that** one of the pinching elements (30) is configured as a severing means.

16. The device according to claim 14 or 15, **characterized in that** one of the pinching elements (30) comprises a supply channel (76) for supplying the endless material (74).

17. The device according to one of claims 6-16, **characterized in that** two closing devices (24) are arranged behind each other in conveyance direction in such a manner that the empty tube section (26) is arranged between the two closing devices (24).

18. The device according to claim 17, **characterized in that** the cutting means (28) is arranged between the two closing devices (24).

19. A method for producing tubular packs (16) that are filled with a product, particularly a foodstuff, with the steps of
supplying the tubular pack (16) filled with a product to a closing device (24),
supplying a closing clasp (22) to at least three pinching elements (30,32,34,36,38,40) of the closing device which surround the tubular pack (16),
displacing the pinching elements (30,32,34,36,38,40) in radial direction (66) so that radial pinching forces are exerted onto the closing clasp (22) by the pinching elements (30,32,34,36,38,40), and
separating the tubular pack (16) between two closing clasps (22) succeeding each other in conveyance direction.

20. The method according to claim 19, wherein the pinching elements (30,32,34,36,38,40) are displaced by rotating a displacing element (42) connected with the pinching elements (30,32,34,36,38,40).

21. The method according to claim 19 or 20, wherein a tubular pack (16) filled with a product and an empty tube section (26) are alternately formed between two closing clasps (22) succeeding each other in conveyance direction.

22. The method according to one of claims 19-21, wherein endless material (74), particularly endless wire, is supplied to the closing device (24) and the endless material (74) is severed to form the closing clasp (22).

23. The method according to claim 22, wherein the endless material (74) is severed in dependence on the circumference of the closing clasp (22) in the crimped state.

24. The method according to claim 23, wherein the endless material (74) is severed such that the ends of the closing clasp (22) do not overlap each other in the crimped state.

25. The method according to one of claims 19-24, wherein such a pinching force is generated that the packaging material (10) bonds to, particularly fuses with itself.

## Revendications

1. Dispositif pour la fabrication d'emballages tubulaires (16) remplis d'un produit, en particulier d'un produit alimentaire, comprenant
un dispositif de transport pour transporter un tuyau (10) rempli du produit ; et
un dispositif de fermeture (24) pour fermer le tuyau (10), avec des éléments de serrage (30, 32, 34, 36, 38, 40), mobiles les uns par rapport aux autres, en vue de comprimer une agrafe de fermeture (22) fermant le tuyau (10),
**caractérisé en ce que** le dispositif de fermeture (24) comporte au moins trois éléments de serrage (30, 32, 34, 36, 38, 40) qui sont déplaçables au moyen d'un élément de déplacement (42) de telle manière que les éléments de serrage (30, 32, 34, 36, 38, 40) exercent sur l'agrafe de fermeture (22) des forces de serrage dirigées radialement vers l'intérieur.

2. Dispositif selon la revendication 1, **caractérisé en ce que** les éléments de serrage (30, 32, 34, 36, 38, 40) sont disposés de manière radialement déplaçable.

3. Dispositif selon la revendication 1 ou 2, **caractérisé en ce que** le déplacement des éléments de serrage (30, 32, 34, 36, 38, 40) s'effectue par rotation de l'élément de déplacement.

4. Dispositif selon l'une des revendications 1 à 3, **caractérisé en ce que** le dispositif de fermeture (24) est constitué à la manière d'un diaphragme, de telle sorte que la rotation de l'élément de déplacement (42) entraîne un.déplacement des éléments de serrage (30, 32, 34, 36, 38, 40).

5. Dispositif selon l'une des revendications 1 à 4, **caractérisé en ce que** l'élément de déplacement (42) comporte des appendices (50) ou des fentes, de telle manière que chaque appendice (50) ou fente est en prise respectivement avec une fente (52) ou un appendice prévu dans chaque élément de serrage (30, 32, 34, 36, 38, 40), de sorte que lors de l'actionnement de l'élément de déplacement (42) les appendices (50) glissent dans les fentes (52).

6. Dispositif selon l'une des revendications 1 à 5, **caractérisé en ce que**, entre les agrafes de fermeture (22), qui se succèdent dans la direction de transport, sont constitués alternativement un emballage tubulaire (16) rempli de produit et un tronçon de tuyau non rempli (26).

7. Dispositif selon la revendication 6, **caractérisé par** un dispositif de découpage (28) pour diviser le tuyau (10) au niveau du tronçon de tuyau non rempli.

8. Dispositif selon l'une des revendications 1 à 7, **caractérisé en ce que** les éléments de serrage (30, 32, 34,36, 38, 40) sont disposés dans un plan.

9. Dispositif selon l'une des revendications 1 à 5, **caractérisé en ce qu'**un côté étroit (64) d'un élément de serrage (30, 32, 34, 36, 38, 40) glisse sur un côté étroit (62) d'un élément de serrage (30, 32, 34, 36, 38, 40) voisin.

10. Dispositif selon la revendication 9, **caractérisé en ce qu'**un côté étroit (62) comporte une rainure de guidage (72) avec laquelle est en prise un appendice de guidage (70) du côté étroit voisin (64).

11. Dispositif selon l'une des revendications 1 à 10, **caractérisé en ce que** les éléments de serrage sont en forme de segments d'anneau de cercle ou réniformes.

12. Dispositif selon l'une des revendications 1 à 7, **caractérisé en ce que** les éléments de serrage sont disposés en plusieurs plans parallèles entre eux.

13. Dispositif selon l'une des revendications 1 à 12, **caractérisé en ce que** les éléments de serrage (30, 32, 34, 36, 38, 40) sont disposés de telle manière que l'agrafe de fermeture (22), à l'état comprimé, est en forme de triangle ou d'hexagone.

14. Dispositif selon l'une des revendications 1 à 13, **caractérisé par** un dispositif de tronçonnage pour tronçonner l'agrafe de fermeture (22) amenée sous forme de matériau sans fin, et en particulier de fil métallique sans fin.

15. Dispositif selon la revendication 14, **caractérisé en ce que** l'un des éléments de serrage (30) est constitué sous la forme d'un dispositif de tronçonnage.

16. Dispositif selon la revendication 14 ou 15, **caractérisé en ce que** l'un des éléments de serrage (30) comporte une conduite d'alimentation (76) pour amener le matériau sans fin (74).

17. Dispositif selon l'une des revendications 6 à 16, **caractérisé en ce que** deux dispositifs de fermeture (24) sont disposés l'un derrière l'autre dans la direction de transport, de telle manière que le tronçon de tuyau (26) non rempli soit disposé entre ces deux dispositifs de fermeture (24).

18. Dispositif selon la revendication 17, **caractérisé en ce que**, entre les deux dispositifs de fermeture (24), est disposé le dispositif de découpage (28).

19. Procédé de fabrication d'emballages tubulaires (16) remplis d'un produit, et en particulier d'un produit alimentaire, comprenant les étapes suivantes :
amenée de l'emballage tubulaire (16) rempli de produit vers un dispositif de fermeture (24) ;
amenée d'une agrafe de fermeture (22) vers au moins trois éléments de serrage (30, 32, 34, 36, 38, 40), entourant l'emballage tubulaire (16) du dispositif de fermeture (24);
déplacement des éléments de serrage (30, 32, 34, 36, 38, 40) dans la direction radiale, de sorte que les éléments de serrage (30, 32, 34, 36, 38, 40) exercent des forces de serrage radiales sur l'agrafe de fermeture (22) ;
division de l'emballage tubulaire (16) entre deux agrafes de fermeture (22) se succédant dans la direction de transport.

20. Procédé selon la revendication 19, dans lequel le déplacement des éléments de serrage (30, 32, 34, 36, 38, 40) s'effectue par rotation d'un élément de déplacement (42) relié aux éléments de serrage (30, 32, 34, 36, 38, 40).

21. Procédé selon la revendication 19 ou 20, dans lequel, entre deux agrafes de fermeture (22) se succédant suivant la direction de transport, sont constitués alternativement un emballage tubulaire (16) rempli d'un produit et un tronçon de tuyau non rempli (26).

22. Procédé selon l'une des revendications 19 à 21, dans lequel un matériau sans fin (74), et en particulier un fil métallique sans fin, est amené vers le dispositif de fermeture (24), et ce matériau sans fin (74) est tronçonné pour former l'agrafe de fermeture.

23. Procédé selon la revendication 22, dans lequel le matériau sans fin (74) est tronçonné en fonction du périmètre de l'agrafe de fermeture (22) à l'état comprimé.

24. Procédé selon la revendication 23 dans lequel le matériau sans fin (74) est tronçonné de telle manière que les extrémités de l'agrafe de fermeture (22) à l'état comprimé ne se chevauchent pas.

25. Procédé selon l'une des revendications 19 à 24, dans lequel est produite une force de serrage telle que le matériau d'emballage (10) s'agglomère et de préférence fusionne.
